# FASCICULE DE BREVET EUROPEEN

(11) **EP 3 120 042 B1**
(45) Date de publication et mention de la délivrance du brevet: **11.12.2019**
(21) Numéro de dépôt: 15710493.6
(22) Date de dépôt: 17.03.2015
(51) Int. Cl.: F16G 11/04

(54) **DISPOSITIF D'ATTACHE**
BEFESTIGUNGSVORRICHTUNG
ATTACHMENT DEVICE

(30) Priorité: 17.03.2014 FR 1452190
(43) Date de publication de la demande: 25.01.2017
(73) Titulaire: Urban Associes Architectes, 56370 Sarzeau (FR)
(72) Inventeur: LAURANT, Yves, Claire, Georges, F-56370 Sarzeau (FR)
(74) Mandataire: Regimbeau
(86) Numéro de dépôt international: PCT/EP2015/055564
(87) Numéro de publication internationale: WO 2015/140170

(56) Documents cités:
- US-A- 1 421 026
- US-A- 2 832 116
- US-A1- 2004 194 259

## Description

### DOMAINE TECHNIQUE GENERAL

L'invention concerne le domaine des dispositifs d'attache, notamment les manilles textiles, les fermoirs, les sangles, et les tendeurs.

### ETAT DE L'ART

Il est connu de l'art antérieur des dispositifs d'attache, notamment des manilles textiles.

Le document FR 2 893 378 décrit par exemple une manille textile réalisée dans un cordage tressé tubulaire. La manille comprend à une première extrémité du cordage une boucle, et à une deuxième extrémité du cordage une boule formée à partir de deux brins du cordage et destinée à être insérée dans la boucle afin de maintenir la manille en position serrée. Cette manille s'applique notamment au domaine de l'accastillage.

Un autre exemple de dispositif d'attache connu est décrit dans le document CH 170739. Dans ce document, il est décrit une manille comprenant une corde munie d'une boucle fermée en un point de jonction depuis lequel s'étend deux éléments de corde et d'une broche située à l'extrémité de l'un des éléments de corde et destinée à être insérée dans la boucle, afin de maintenir la manille en position serrée. US2004/0194259 divulgue un dispositif d'attache avec un élément de blocage.

Cependant, avec de telles manilles, la distance séparant les deux pièces à relier dépend de la longueur de la corde et n'est pas ajustable. De telles manilles peuvent donc difficilement s'adapter à des conditions variées d'utilisation.

### PRESENTATION DE L'INVENTION

Dans tout le présent texte, on entend par « corde », tout corps long, flexible, résistant et en particulier, de façon préférentielle mais non nécessairement limitative, tout cordage en matière naturelle ou synthétique réalisé par un assemblage de fils tordus et/ou tressés.

La présente invention concerne un dispositif d'attache selon revendication 1 et l'utilisation de dispositif d'attache selon revendication 11.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre un dispositif d'attache selon un premier mode de réalisation de l'invention ;
- la figure 2 illustre un dispositif d'attache selon un deuxième mode de réalisation de l'invention ;
- la figure 3 illustre un dispositif d'attache selon un troisième mode de réalisation de l'invention ;
- la figure 4 illustre la réalisation d'un nœud simple au moyen d'un dispositif d'attache selon un mode de réalisation de l'invention ;
- les figures 5a et 5b illustrent la réalisation d'un double nœud au moyen d'un dispositif d'attache selon un mode de réalisation de l'invention ;
- les figures 6a et 6b illustrent la réalisation d'un nœud autobloquant au moyen d'un dispositif d'attache selon un mode de réalisation de l'invention.

### DESCRIPTION DETAILLEE

### Principe du dispositif d'attache

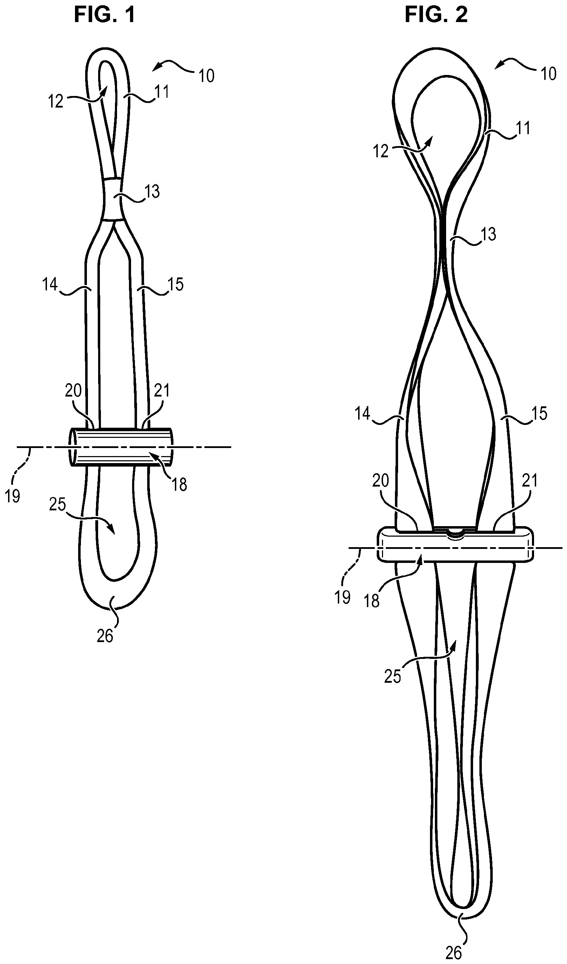

Les figures 1, 2 et 3 représentent un dispositif d'attache 10 selon différents modes de réalisation possibles.

Le dispositif d'attache 10 est principalement formé par une corde 11 et par un élément d'ajustement et de blocage 18 monté sur celle-ci.

La corde 11 est d'un côté refermée sur elle-même pour former une boucle 12. De l'autre côté, au-delà du point de jonction 13 sur lequel la boucle 12 se referme, ladite corde 11 se prolonge par deux portions de corde 14 et 15 réunies au niveau de l'élément d'ajustement et de blocage 18.

L'élément d'ajustement et de blocage 18 constitue une broche de fermeture qui est destinée à être passée dans la boucle 12 pour refermer le dispositif d'attache, afin de l'utiliser par exemple comme une manille.

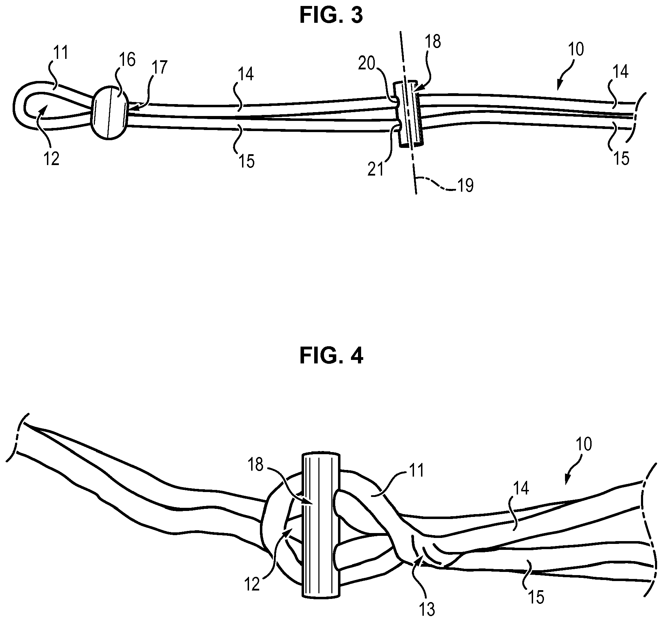

Cet élément 18 a par exemple à cet effet une forme cylindrique ou en « os de chien » et est dimensionné pour se bloquer sur la boucle 12 une fois que ledit élément 18 est passé dans ladite boucle 12 (figure 4) et que l'intérieur de la boucle ainsi formée par l'attache refermée sur elle-même est mis sous tension.

L'élément 18 a en outre la particularité d'être ajustable le long des portions de corde 14, 15.

A cet effet, il présente deux ouvertures traversantes 20, 21 recevant respectivement l'une et l'autre des deux portions de corde 14, 15.

Ces ouvertures 20, 21 sont par exemple parallèles l'une à l'autre. Elles sont conformées et dimensionnées de façon à permettre à un utilisateur de faire coulisser l'élément 18 sur les portions de cordes 14 et 15. L'élément 18 peut coulisser le long des portions de corde 14, 15 que le dispositif d'attache 10 soit refermé sur lui-même et sous tension ou non.

De cette manière, la boucle de fermeture du dispositif 10 est ajustable, et le dispositif d'attache 10 peut donc facilement s'adapter à des conditions variées d'utilisation.

### Exemples de matériaux - Détails de réalisation

La corde 11 peut être en tout type de matériau.

Elle est par exemple en un cordage de fibres creuses ou de fibres végétales. Ce cordage peut également intégrer des fibres métalliques.

La corde 11 peut en outre être en des matériaux comprenant du caoutchouc naturel ou synthétique, du cuir, ou du plastique, voire des portions métalliques.

Elle peut avoir une section circulaire ou bien avoir la forme d'une bande.

Ainsi, la corde 11 et les portions de corde 14, 15 peuvent également être une sangle, un câble, une ceinture ou un tendeur aussi appelé « sandow » selon la terminologie anglo-saxonne.

L'élément d'ajustement et de blocage 18 peut également être en différents types de matériaux, par exemple en bois, bambou, aluminium, alliage d'aluminium, acier, inox, plastique, joncs ou lattes de polyester ou de carbone, laiton, cuivre, bronze, etc.

Il peut être de différents types de forme et est de préférence allongé.

Il peut par exemple être de section circulaire, d'autres sections étant bien entendu possibles (triangulaires, rectangulaires, carrées, ...).

Le dispositif d'attache 10 peut également comprendre plusieurs éléments d'ajustement et de blocage 18 montés en série sur les portions de corde 14, 15.

Ses ouvertures 20, 21 sont perpendiculaires à l'axe principal 19 selon lequel il s'étend. Les ouvertures 20, 21 sont de préférence de forme complémentaire avec les portions de corde 14, 15. Les ouvertures 20, 21 présentent par exemple une section circulaire, carrée, rectangulaire, etc. Les ouvertures 20, 21 peuvent également présenter un profil globalement tronconique, de sorte à bloquer le coulissement des portions de corde 14, 15 dans un sens. Les dimensions de la section des ouvertures 20, 21 sont de préférence inférieures ou égales aux dimensions de la section des portions de corde 14, 15 à vide. On entend par « à vide », un état des portions de corde 14, 15 non contraint. Lorsque les portions de corde 14, 15 présentent une section circulaire, les ouvertures 20, 21 sont rapprochées et espacées avec un entraxe inférieur ou égal à la somme des diamètres des portions de corde 14, 15, de sorte que l'effort soit bien réparti sur les portions de corde 14, 15. Lorsque les portions de corde 14, 15 ont la forme d'une bande, les ouvertures 20, 21 sont rapprochées et espacées avec un entraxe supérieur à la somme de l'épaisseur des portions de corde 14, 15. Le point de jonction 13 de la première boucle 12 est par exemple réalisé par matelotage, par épissure, par tressage, par sertissage, par collage, par soudure, ou par découpage, etc., la boucle 12 et les portions de corde 14, 15 étant réalisées d'un seul tenant, par une même corde 11 ou étant réalisés par plusieurs éléments de corde distincts. De préférence, la première boucle 12 présente un diamètre inférieur ou égal à l'allongement de l'élément d'ajustement et de blocage 18, de sorte à éviter que la première boucle 12 ne se désengage de l'élément d'ajustement et de blocage 18.

Par ailleurs, ainsi qu'illustrée à la figure 3, le dispositif d'attache 10 peut comprendre au niveau du point de jonction 13 un élément de jonction 16, qui assure la fermeture de la boucle 12 sur elle-même et qui comporte une ouverture 17 accueillant les deux branches de corde réunies au niveau dudit point de jonction 13. Cet élément de jonction 16 autorise le coulissement des banches de corde et permet par conséquent le réglage de la boucle 12. L'ouverture 17 de l'élément de jonction 16 présente par exemple une section circulaire. Dans ce cas, le diamètre de l'ouverture 17 est de préférence inférieur ou égal à la somme des diamètres de la corde 11 à vide. La corde 11 présente par exemple au niveau de la boucle 12, une surépaisseur configurée pour empêcher l'élément de jonction 16 de glisser le long de la corde 11 jusqu'à s'en extraire.

Egalement, à leur extrémité opposée au point de jonction 13, les deux branches de corde que constituent les portions 14 et 15 sont refermées l'une sur l'autre, soit qu'elles soient d'un seul tenant du point de jonction 13 à lui-même comme illustré sur la figure 1, soit qu'elles soient reliées au niveau d'une zone de jonction 26.

Dans les deux cas, la boucle 25 ainsi formée permet d'éviter que l'élément d'ajustement et de blocage 18 ne se désengage des banches de corde et ne se désolidarise du dispositif d'attache 10. La boucle 25 peut également être utilisée pour réaliser des nœuds particuliers.

La liaison au niveau de cette zone de jonction 26 est par exemple réalisée par couture, par soudure, par collage, au moyen d'une gaine en matériau thermorétractable, par thermofusion, par serrage, par sertissage ou par matelotage.

Les branches de corde peuvent encore se prolonger au-delà de cette zone de jonction 26 et être réunie un peu plus loin pour former ainsi ensemble une nouvelle boucle analogue à la boucle 12, offrant ainsi plusieurs possibilités d'utilisation pour l'utilisateur. Dans cette hypothèse par exemple, le dispositif d'attache 10 peut alors comprendre plusieurs éléments de blocage et d'ajustement.

### Exemples d'utilisation

La figure 4, déjà discutée, donne un premier exemple d'utilisation d'un dispositif d'attache du type de ceux qui viennent d'être décrits.

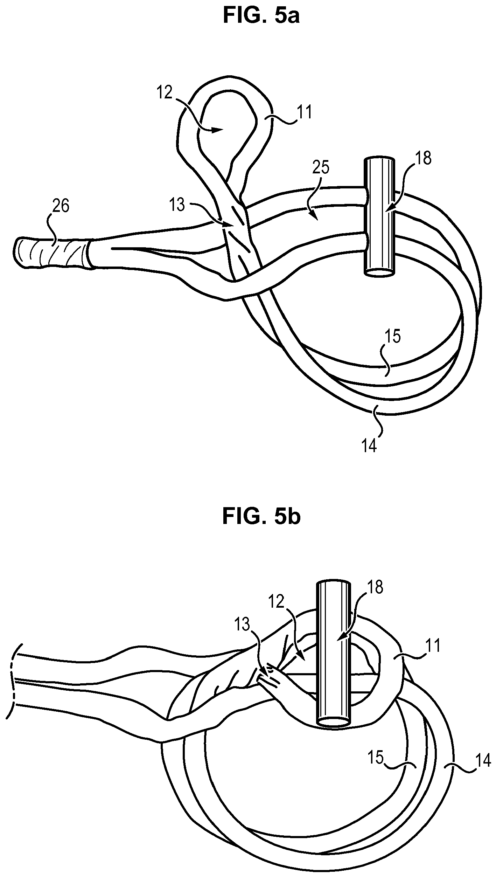

Les figures 5a et 5b illustrent quant à elles la réalisation d'un nœud double. Pour réaliser ce double nœud, la boucle 12 et les portions 14, 15 fermées par l'élément de blocage 18 sont enroulées pour que la première boucle 12 soit passée dans la boucle 25. La boucle 12 est ensuite repassée sur l'élément de blocage 18.

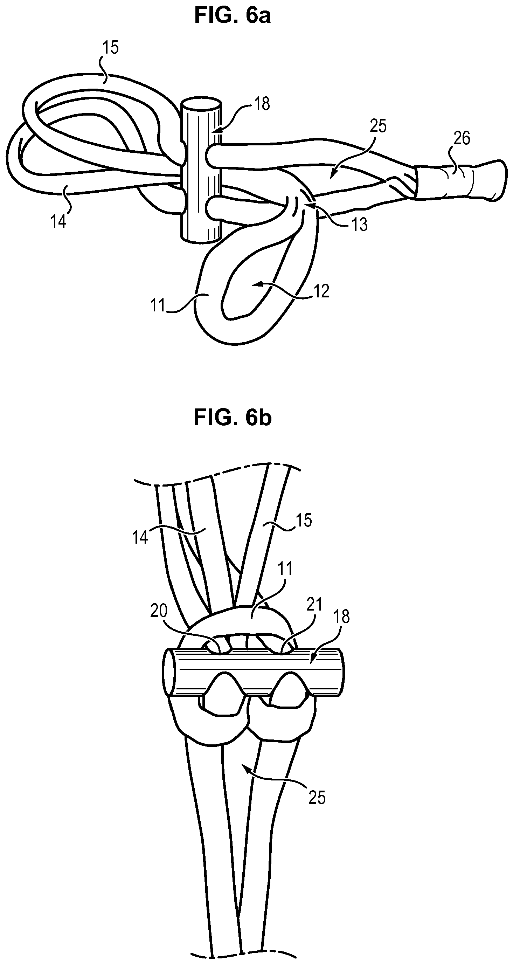

Les figures 6a et 6b illustrent quant à elles la réalisation d'un nœud autobloquant. Pour réaliser ce nœud autobloquant les portions 14, 15 fermées par l'élément de blocage 18 sont enroulées pour que la première boucle 12 soit passée d'une part entre les portions 14 et 15, puis dans la boucle 25. La boucle 12 est ensuite passée sur l'élément de blocage 18. Un tel nœud autobloquant empêche tout glissement de l'élément de blocage 18, même sous forte charge.

Dans chacun des exemples d'utilisation décrit ci-avant, c'est le cisaillement appliqué par la première boucle 12 sur les portions de corde 14, 15 qui assure le blocage du dispositif 10, lorsque le dispositif 10 est sous tension.

Le dispositif d'attache 10 qui vient d'être décrit peut être assemblé à un anneau à friction, à une poulie fixe ou ouvrante, de sorte à former un palan. Un tel palan peut par exemple être utilisé dans le domaine nautique ou le domaine des BTP.

Il peut notamment s'utiliser dans le domaine nautique, par exemple comme manille ou encore comme dispositif d'attache destiné à être assemblé à une manille métallique existante.

Il peut également servir de fermoir pour vêtement, ceinture, bijoux, sacs, etc.

Le dispositif d'attache 10 peut en outre être utilisé dans le domaine médical, par exemple comme ligature.

## Revendications

1. Dispositif d'attache (10) comprenant :
- deux portions de cordes (14, 15) s'étendant à partir d'un point de jonction (13) à partir duquel s'étend également une boucle (12), les deux portions de corde (14, 15) d'une part et la boucle (12) d'autre part s'étendant d'un côté et de l'autre du point de jonction (13),
- un élément de blocage (18) réunissant les portions de corde à un endroit différent du point de jonction,
ledit élément de blocage étant apte à être coulissé le long des portions de corde, le dispositif d'attache étant ainsi ajustable,
ledit élément de blocage est apte à être passé dans la boucle pour refermer le dispositif sur lui-même et assurer un blocage, et en ce que ledit élément de blocage est dimensionné pour se bloquer sur la boucle (12) une fois que ledit élément de blocage est passé dans ladite boucle et que l'intérieur de la boucle ainsi formée par le dispositif d'attache (10) refermé sur lui-même est mis sous tension.

2. Dispositif (10) selon la revendication 1, dans lequel l'élément de blocage (18) comporte deux ouvertures traversantes (20, 21) recevant respectivement l'une et l'autre des deux portions de corde (14, 15), ces ouvertures étant conformées et dimensionnées de façon à permettre le coulissement de l'élément de blocage sur les portions cordes.

3. Dispositif (10) selon l'une des revendications précédentes, dans lequel la boucle (12) et les portions de corde (14, 15) sont réalisées d'un seul tenant, par une même corde (11).

4. Dispositif (10) selon la revendication 3, comportant un élément de jonction (16) qui assure la fermeture de la boucle (12) sur elle-même, ledit élément de jonction comportant une ouverture (17) accueillant les deux branches de corde (14, 15) réunies au niveau dudit point de jonction (13) et autorisant le coulissement des banches de corde, pour le réglage de ladite boucle.

5. Dispositif (10) selon l'une des revendications 1 ou 2, dans lequel les deux portions de corde sont réalisées par plusieurs éléments de corde distincts.

6. Dispositif (10) selon l'une des revendications précédentes, dans lequel, à leur extrémité opposée au point de jonction (13), les deux portions de corde (14, 15) sont refermées l'une sur l'autre.

7. Dispositif (10) selon la revendication 6, dans lequel les portions de corde (14, 15) sont d'un seul tenant.

8. Dispositif (10) selon la revendication 6, dans lequel les portions de corde (14, 15) sont reliées entre elles au niveau d'une seconde zone de jonction (26).

9. Dispositif selon la revendication 8, dans lequel les branches de corde (14, 15) se prolongent au-delà de cette seconde zone de jonction et sont réunies plus loin pour former ensemble une boucle supplémentaire (25).

10. Utilisation d'un dispositif d'attache (10) selon l'une des revendications précédentes dans le domaine nautique ou le domaine des BTP ou le domaine médical.

11. Utilisation d'un dispositif d'attache (10) selon l'une des revendications 1 à 9 comme fermoir pour vêtements et/ou ceintures et/ou bijoux et/ou sacs ou comme ligature.

## Patentansprüche

1. Befestigungsvorrichtung (10), umfassend:
- zwei Seilabschnitte (14, 15), die sich ab einem Verbindungspunkt (13) erstrecken, ab dem sich ebenfalls eine Schlaufe (12) erstreckt, wobei sich die beiden Seilabschnitte (14, 15) zum einen und die Schlaufe (12) zum anderen auf einer Seite und der anderen des Verbindungspunkts (13) erstrecken,
- ein Blockierelement (18), welches die Seilabschnitte an einer Stelle vereint, die sich vom Verbindungspunkt unterscheidet,
wobei das Blockierelement imstande ist, entlang der Seilabschnitte zu gleiten, wobei die Befestigungsvorrichtung damit einstellbar ist,
wobei das Blockierelement imstande ist, in die Schlaufe geführt zu werden, um die Vorrichtung in sich zu schließen und eine Blockade zu gewährleisten, und dass das Blockierelement bemessen ist, um sich auf der Schlaufe (12) zu blockieren, sobald das Blockierelement in die Schlaufe geführt ist und dass das Innere der derart von der Befestigungsvorrichtung (10) gebildeten, in sich geschlossenen Schlaufe gespannt wird.

2. Vorrichtung (10) nach Anspruch 1, wobei das Blockierelement (18) zwei Durchgangsöffnungen (20, 21) aufweist, die jeweils den einen und den anderen der zwei Seilabschnitte (14, 15) aufnehmen, wobei diese Öffnungen derart ausgebildet und bemessen sind, dass das Gleiten des Blockierelements auf den Seilabschnitten gestattet ist.

3. Vorrichtung (10) nach einem der vorangehenden Ansprüche, wobei die Schlaufe (12) und die Seilabschnitte (14, 15) zusammenhängend aus ein und demselben Seil (11) hergestellt sind.

4. Vorrichtung (10) nach Anspruch 3, aufweisend ein Verbindungselement (16), das den Verschluss der Schlaufe (12) in sich gewährleistet, wobei das Verbindungselement eine Öffnung (17) aufweist, welche die zwei im Bereich des Verbindungspunkts (13) verbundenen Seilabzweigungen (14, 15) empfängt und das Gleiten der Seilabzweigungen zum Einstellen der Schlaufe erlaubt.

5. Vorrichtung (10) nach einem der Ansprüche 1 oder 2, wobei die zwei Seilabschnitte aus mehreren unterschiedlichen Seilelementen hergestellt sind.

6. Vorrichtung (10) nach einem der vorangehenden Ansprüche, wobei die zwei Seilabschnitte (14, 15) an ihrem Ende gegenüber dem Verbindungspunkt (13) in sich geschlossen sind.

7. Vorrichtung (10) nach Anspruch 6, wobei die Seilabschnitte (14, 15) zusammenhängend sind.

8. Vorrichtung (10) nach Anspruch 6, wobei die Seilabschnitte (14, 15) im Bereich einer zweiten Verbindungszone (26) miteinander verbunden sind.

9. Vorrichtung nach Anspruch 8, wobei sich die Seilabzweigungen (14, 15) jenseits dieser Verbindungszone verlängern und entfernter verbunden sind, um gemeinsam eine zusätzliche Schlaufe (25) zu bilden.

10. Verwendung einer Befestigungsvorrichtung (10) nach einem der vorangehenden Ansprüche im Bereich der Seefahrt oder des Bauwesens oder der Medizin.

11. Verwendung einer Befestigungsvorrichtung (10) nach einem der Ansprüche 1 bis 9 als Verschluss für Bekleidung und/oder Gürtel und/oder Schmuck und/oder Taschen oder als Ligatur.

## Claims

1. A fastening device (10) comprising:
- two portions of ropes (14, 15) extending from a junction point (13) from which a loop (12) also extends, both portions of rope (14, 15) on the one hand and the loop (12) on the other hand extending on either side of the junction point (13),
- a locking element (18) joining the portions of rope at a different location from the junction point,
said locking element being able to be slid along the portions of rope, the fastening device being thereby adjustable,
said locking element being able to be passed in the loop to close the device on itself and provide a locking, and said locking element is sized to lock on the loop (12) once said locking element has passed in said loop and that the inside of the loop thus formed by the fastening device (10) closed on itself is tensioned.

2. The device (10) according to claim 1, wherein the locking element (18) includes two through apertures (20, 21) respectively receiving both portions of rope (14, 15), these apertures being shaped and sized so as to enable the sliding of the locking element on the portions of ropes.

3. The device (10) according to one of the previous claims, wherein the loop (12) and the portions of rope (14, 15) are made unitary, by a same rope (11).

4. The device (10) according to claim 3, including a junction element (16) which provides the closing of the loop (12) on itself, said junction element including an aperture (17) accommodating both branches of rope (14, 15) joined at said junction point (13) and enabling the sliding of the branches of rope, to adjust said loop.

5. The device (10) according to one of claims 1 and 2, wherein both portions of rope are made by several distinct rope elements.

6. The device (10) according to one of the previous claims, wherein, at their end opposite the junction point (13), both portions of rope (14, 15) are closed on each other.

7. The device (10) according to claim 6, wherein the portions of rope (14, 15) are unitary.

8. The device (10) according to claim 6, wherein the portions of rope (14, 15) are connected to each other at a second junction area (26).

9. The device according to claim 8, wherein the branches of rope (14, 15) continue beyond this second junction area and are joined farther to form together an additional loop (25).

10. A use of a fastening device (10) according to one of the previous claims, in the nautical field or the building and civil industry field or the medical field.

11. The use of a fastening device (10) according to one of claims 1 to 9, as a clasp for clothes and/or belts and/or jewels and/or bags or as a ligature.
